# EUROPÄISCHE PATENTSCHRIFT

(11) **EP 0 699 859 B1**
(45) Veröffentlichungstag und Bekanntmachung des Hinweises auf die Patenterteilung: **08.04.1998**
(21) Anmeldenummer: 95111122.8
(22) Anmeldetag: 15.07.1995
(51) Int. Cl.: F16K 31/06

(54) **Elektromagnetisches Schaltventil**
Solenoid switching valve
Electrovanne de commande

(30) Priorität: 30.08.1994 DE 4430723
(43) Veröffentlichungstag der Anmeldung: 06.03.1996
(73) Patentinhaber: Pierburg Aktiengesellschaft, 41460 Neuss (DE)
(72) Erfinder: Zurke, Janusz, D-42279 Willich (DE); Buse, Werner, D-41564 Kaarst (DE); Scheiff, Horst, D-47877 Willich (DE)

(56) Entgegenhaltungen:
- DE-A- 4 033 946
- DE-C- 4 305 987
- US-A- 2 596 409
- US-A- 3 810 489
- US-A- 5 145 148

## Beschreibung

Die Erfindung betrifft ein elektromagnetisches Schaltventil, insbesondere für eine Anwendung bei Brennkraftmaschinen, nach dem Oberbegriff des Anspruchs 1.

Bei Brennkraftmaschinen werden Schaltventile für diverse Schaltfunktionen eingesetzt, zum Beispiel ist aus der DE-A1-41 40 255 ein Schaltventil bei einer Entlüftungsvorrichtung für einen Brennstofftank einer Brennkraftmaschine bekannt, das eine Belüftungsleitung zur Atmosphäre steuert. Die absperrbare Belüftungsleitung ermöglicht es, gezielt Unter- und Überdrücke in der Anlage einstellen zu können, um dadurch deren Funktionstüchtigkeit zu überprüfen. Es handelt sich hierbei offenbar um ein Massenprodukt, das wirtschaftlich gefertigt werden muß.

Aus der US-A-3 810 489 ist ein Brennstoffabschaltventil bekannt, das neben den elektromagnetischen Bauteilen eine Membrane und ein Druckventil aufweist.

Eine wirtschaftliche Fertigung wird erreicht, wenn die Fertigungsanlagen eine hohe Auslastung haben, das heißt, eine große Fertigungsstückzahl vorliegt.

Es ist daher Aufgabe der Erfindung, ausgehend von einem gattungsgemäßen Schaltventil wie aus der US-A-3 810 489 bekannt, dieses so auszubilden, daß es wirtschaftlich gefertigt und ausgehend von einem Basisschaltventil mehrere Anwendungen möglich werden können sowie so weiterzubilden, daß eine Bauraum- und Bauteileverringerung erreicht wird.

Diese Aufgabe ist durch die im Patentanspruch 1 angegebenen Merkmale gelöst worden. Vorteilhafte Weiterbildungen sind in den Unteransprüchen angegeben. Beispielsweise bewirkt die konstruktive Ausgestaltung nach Patentanspruch 9 eine Begrenzung der Unter- oder Überdrücke, die sonst die Anlage zerstören könnten.

Ausführungsbeispiele der Erfindung sind in der Zeichnung dargestellt und werden nachfolgend beschrieben.

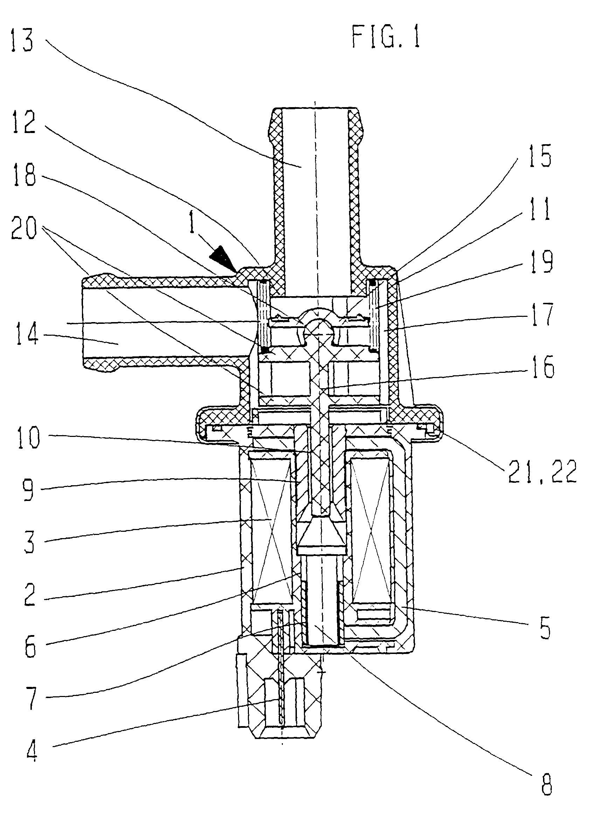

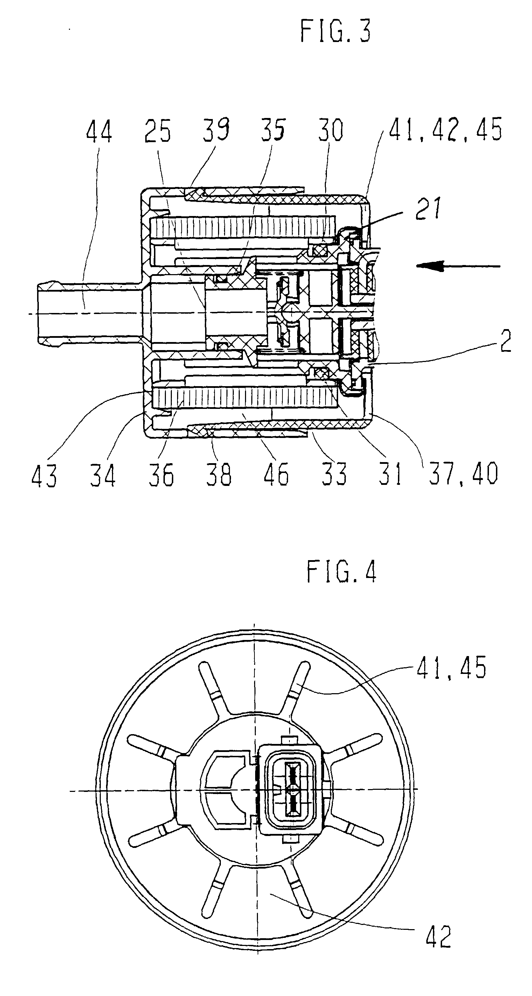

Diese zeigt:
**Fig. 1**
   ein erfindungsgemäßes elektrisches Schaltventil,
**Fig. 2 und 3**
   alternative Ausbildungen des Schaltventils nach Fig. 1,
**Fig. 4**
   eine Ansicht aus Fig. 3,
**Fig. 5**
   eine besondere Ausbildung der Ausführung nach Fig. 3,
**Fig. 6 und 7**
   alternative Ausführungen der vorliegenden Erfindung.

Fig. 1 zeigt einen Schnitt durch ein elektrisches Schaltventil 1, bestehend aus einem Spulengehäuse 2, in dem ein Spulenkörper 3 mit Anschlüssen 4 sowie ein Ankerjoch 5 vergossen sind. In einer zentralen Bohrung 6 sind ein Lagerabschnitt 7 für einen Magnetanker 8 sowie ein Ankerkern 9 angeordnet, wobei der Ankerkern 9 eine Durchgangsöffnung 10 aufweist. Desweiteren besteht das Ventil 1 aus einem Ventilgehäuse 11 mit einem Ventilsitz 12 zwischen zwei Anschlußstutzen 13, 14, der mit einer Ventilplatte 15 zusammenwirkt.

Zwischen Magnetanker 8 und Ventilplatte 15 ist eine Zwischenstange 16 eingespannt, die im Ventilgehäuse 11 innerhalb von Längsrippen 17 radial geführt ist und durch die Durchgangsöffnung 10 des Ankerkerns 9 ragt. Die Ventilplatte 15 ist in einem Kugelpfannenlager 18 radial und axial gelagert, wobei die Zwischenstange 16 ohne radiale Lagerung am Magnetanker 8 anliegt.

Zwischen dem Ventilgehäuse 11 und der Zwischenstange 16 ist eine Rückstellfeder 19 angeordnet, die die Zwischenstange 16 gegen den Magnetanker 8 belastet und diesen in Grundstellung hält. Die Zwischenstange 16 weist zwei Scheibenbünde 20 auf, die mit den Längsrippen 17 im Ventilgehäuse 11 zusammenwirken und die Zwischenstange 16 zentrieren. Ventilgehäuse 11 und Spulengehäuse 2 weisen jeweils Bünde 21 auf, die durch Blechumrollungen 22 zusammengehalten werden.

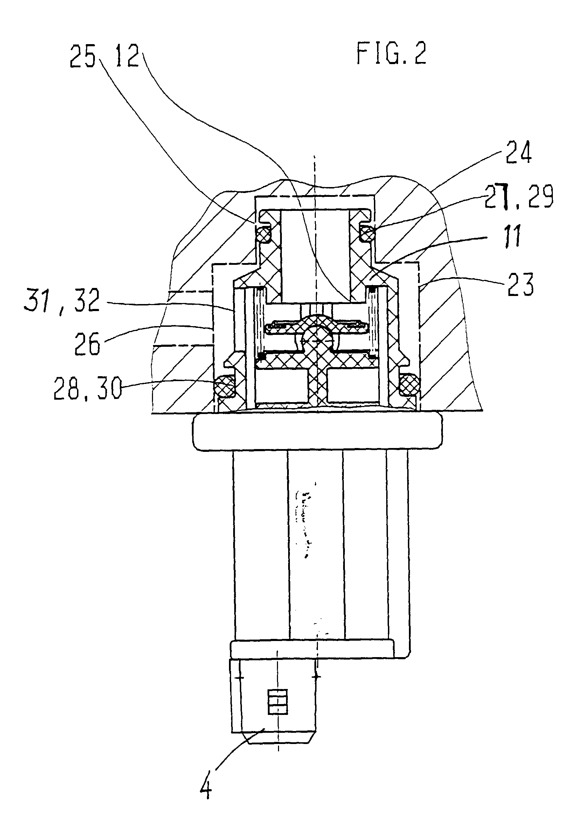

Fig. 2 zeigt eine Variante der Ausführung nach Fig. 1, bei der das Ventilgehäuse 11 in eine Stufenbohrung 23 eines Anschlußgehäuses 24 eingesetzt ist und für jede einzelne Stufenbohrung 25, 26 einen in eine Ventilgehäusenut 27, 28 eingelegten 0-Ring 29, 30 aufweist, wobei das Ventilgehäuse 11 zwischen dem Ventilsitz 12 und einem Stufenabsatz 31, der in die größte Stufenbohrung 26 hineinragt, zwischen den Längsrippen Durchbrüche 32 aufweist. Auf dem Stufenabsatz 31 kann eine Längsrippe bestehen, die in eine Ausnehmung der Stufenbohrung 26 hineinragt und das Schaltventil 1 gegen Verdrehen sichert. Durch diese Maßnahme ist die Lage der elektrischen Anschlüsse 4 fixiert.
Die weiteren Bauteile entsprechen dem Basisschaltventil nach Fig. 1.

Fig. 3 und 4 zeigen eine weitere Variante, bei der das Basisschaltventil der Ausführung nach Fig. 2 benutzt wird und das Anschlußgehäuse von einem Filtergehäuse 33 gebildet ist, das aus einer Filterglocke 34 besteht, die über einen Stufenabsatz 35 für die kleine Stufenbohrung 25 geschoben ist, und aus einem Filterkörper 36, der als Rohrabschnitt über den Stufenabsatz 31 für die große Stufenbohrung 26 geschoben ist, sowie aus einem über das Spulengehäuse 2 geschobene Verspanngehäuse 37, das sich an dem Bund 21 des Spulengehäuses 2 axial abstützt und mit Klippsarmen 38 in die Filterglocke 34 eingreift und in Ausnehmungen 39 einrastet, wobei beim Einrasten an einer Axialwand 40, die sich am Bund 21 des Spulengehäuses 2 abstützt, strahlenförmig ausgebildete Ausnehmungen 41 Federsegmente 42 bilden, die überdrückt werden.

Wie in Fig. 3 ersichtlich, ist vorgesehen, daß sich die Federsegmente 42 bei verklippster Filterglocke 34 und Verspanngehäuse 37 unter Federwirkung an dem Bund 21 des Spulengehäuses 2 abstützen, an dem sich andererseits der Filterkörper 36 abstützt, der mit der anderen Stirnfläche gegen eine Stirnwand 43 der Filterglocke 34 anliegt, wobei die Filterglocke 34 einen Anschlußstutzen 44 aufweist, der in die kleine Stufenbohrung 25 führt, und die strahlenförmigen Ausnehmungen 41 Anschlußöffnungen 45 zur Atmosphäre für eine außerhalb des Filterkörpers 36 bestehende Filterglockenkammer 46 bilden.

Fig. 4 zeigt eine Ansicht der Fig. 3 in Pfeilrichtung, aus der die Ausnehmungen 41 bzw. Anschlußöffnungen 45 sowie die Federsegmente 42 ersichtlich sind.

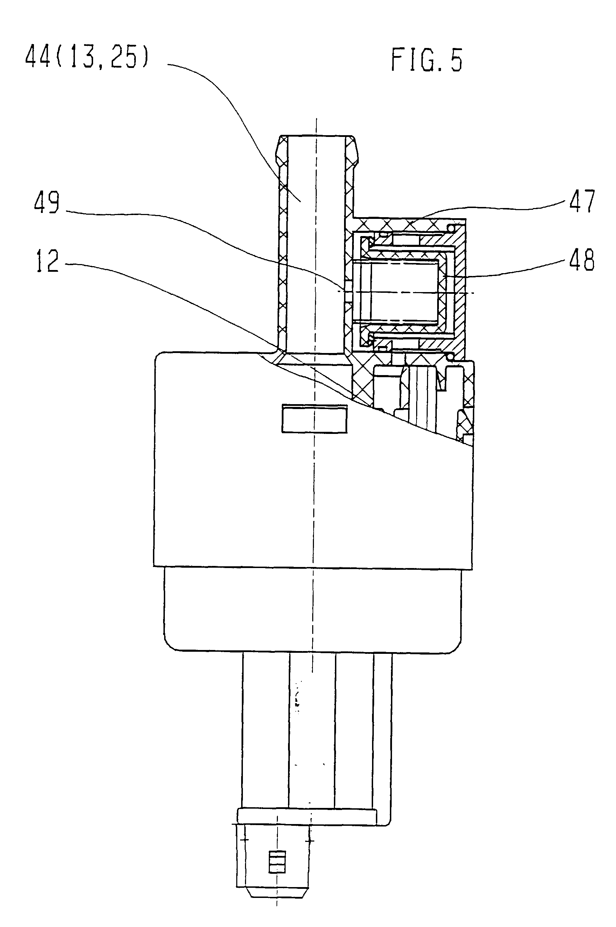

In einer weiteren erfinderischen Ausführung nach Fig. 5 ist vorgesehen, daß an dem Anschlußstutzen 44, 13 oder Anschlußkanal 25, an dem der Ventilsitz 12 angeordnet ist, ein Abzweig 47 angeordnet ist, in dem ein Saug- oder Druckventil 48 angeordnet ist, das einen Bypasskanal 49 zum Ventilsitz 12 steuert. In der Fig. 5 ist ein Saugventil dargestellt.

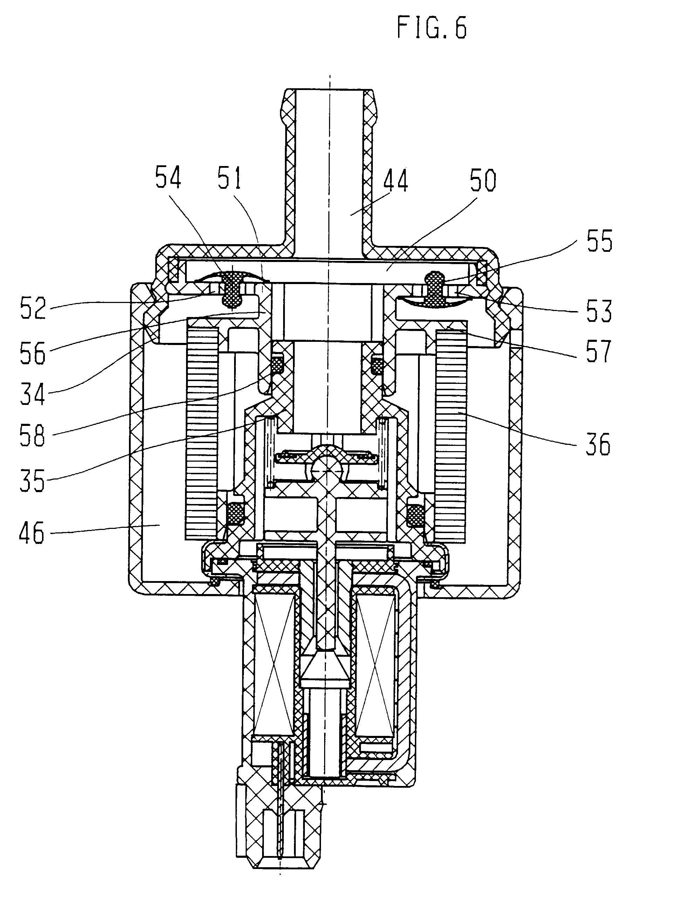

Fig. 6 zeigt ein erfindungsgemäßes Schaltventil, das ausgehend von der Ausführung nach Fig. 5 die Besonderheit aufweist, daß der Abzweig zu einer Zwischenkammer 50 erweitert ist und in deren axialer Begrenzungswand 51, die andererseits die außerhalb des Filterkörpers 36 bestehende Kammer 46 abgrenzt, zwei Bypasskanäle 52, 53 angeordnet sind, die durch Elastomerschließkörper 54, 55 kontrolliert werden, die bei Überschreitung einer vorgegebenen, an ihnen anliegenden Druckdifferenz öffnen oder schließen, wobei die axialen Begrenzungswände 51 durch einen in die Filterglocke 34 vor dem Anschlußstutzenkanal 44 dichtend eingeschobenen Trichterkörper 56 gebildet sind, der mit einem Kragen 57 den Filterkörper 36 abstützt und mit einer zentralen Bohrung 58 den Stufenabsatz 35 aufnimmt.

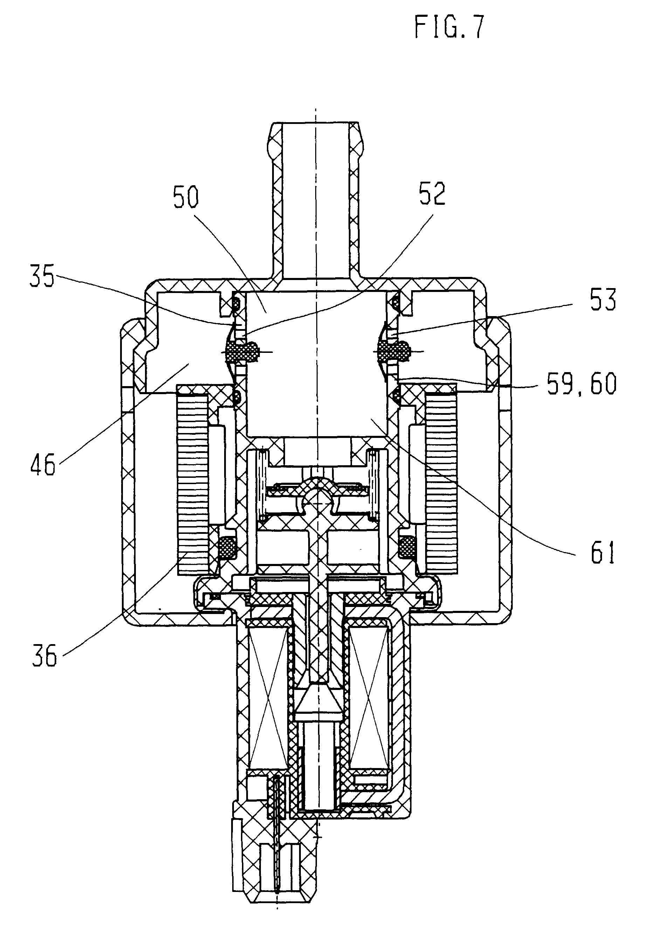

Fig. 7 zeigt eine Ausführung, bei der die zwei Bypasskanäle 52, 53 in einer radialen Begrenzungswand 59 angeordnet sind, die zwischen der Zwischenkammer 50 und der außerhalb des Filterkörpers 36 bestehende Filterglockenkammer 46 angeordnet ist, wobei die radiale Begrenzungswand 59 durch eine axiale Verlängerung 60 des Stufenabsatzes 35 gebildet ist, die eine radiale innere Erweiterung 61, die die Zwischenkammer 50 bildet, aufweist und den Filterkörper 36 dichtend lagert.

Obwohl nicht extra dargestellt, kann eine andere Ausführungsform vorsehen, daß die Bypasskanäle 52, 53 in die innerhalb des Filterkörpers 36 bestehende Kammer und nicht in die Kammer 46 führen.

Das erfindungsgemäße elektrische Schaltventil eignet sich für vielfältige Verwendungen bei Brennkraftmaschinen, so daß insgesamt mit einer hohen Fertigungsstückzahl gerechnet werden kann. Insbesondere bei einer flexiblen Fertigung lassen sich die Ausführungsformen gemäß den Ausführungsbeispielen leicht realisieren. Das Ventil weist eine große Einfachheit bei hoher Funktionssicherheit auf.

Die Ausführungen nach Fig. 5, 6 und 7 lassen eine Verwendung des Schaltventils zu, bei der eine Druckbegrenzung innerhalb einer Anlage, zum Beispiel einer Entlüftungsvorrichtung für einen Brennstofftank einer Brennkraftmaschine, notwendig ist, um bei Störungen in der Druckbeschaltung größeren Schaden zu verhindern, der durch zu hohe Unter- oder Überdrücke entstehen kann. In diesem Fall würde über das Saug- oder Druckventil ein Druckausgleich erfolgen und dadurch ein vorgegebener zulässiger Druck nicht über- oder unterschritten werden.

Die erfindungsgemäßen Ausführungen lassen sich mit geringem Bauaufwand realisieren. Die aus Elastomer bestehenden Ventilkörper 54, 55 sind als Massenartikel preiswert zu beziehen, womit insgesamt auch durch den Wegfall von bisher üblichen Federn eine Verbilligung erreichbar wird.

## Patentansprüche

1. Elektromagnetisches Schaltventil, insbesondere für die Verwendung bei einer Brennkraftmaschine, bestehend aus einem Spulengehäuse (2) und einem Ventilgehäuse (11), einem im Ventilgehäuse (11) angeordneten Ventilelement (15), das mit einem Ventilsitz (12) zusammenwirkt, Anschlußstutzen (13, 14) stromauf und stromab des Ventilsitzes (12), einem Magnetanker (8) und einer Zwischenstange (16), die zwischen Ventilelement (15) und Magnetanker (8) eingespannt ist und ohne radiale Lagerung am Magnetanker (8) anliegt, dadurch gekennzeichnet, daß das Ventilelement als Ventilplatte (15) ausgestaltet ist, die Zwischenstange (16) innerhalb von Längsrippen (17) des Ventilgehäuses (11) radial geführt ist und daß die Ventilplatte (15) in einem an der Zwischenstange (16) vorgesehen Kugelpfannenlager (18) radial und axial gelagert ist.

2. Schaltventil nach Anspruch 1, dadurch gekennzeichnet, daß zwischen Ventilgehäuse (11) und Zwischenstange (16) eine Rückstellfeder (19) angeordnet ist.

3. Schaltventil nach Anspruch 1 oder 2, dadurch gekennzeichnet, daß die Zwischenstange (16) zwei Scheibenbünde (20) aufweist, die mit den Längsrippen (17) zusammenwirken.

4. Schaltventil nach einem der Ansprüche 1 bis 3, dadurch gekennzeichnet, daß das Ventilgehäuse (11) in eine Stufenbohrung (23) eines Anschlußgehäuses (24) eingesetzt ist und für jede einzelne Stufenbohrung (25, 26) einen in eine Ventilgehäusenut (27, 28) eingelegten O-Ring (29, 30) aufweist, wobei das Ventilgehäuse (11) zwischen dem Ventilsitz (12) und dem Stufenabsatz (31), der in die größte Stufenbohrung (26) hineinragt, zwischen den Längsrippen (17) Durchbrüche (32) aufweist.

5. Schaltventil nach Anspruch 4, dadurch gekennzeichnet, daß das Anschlußgehäuse von einem Filtergehäuse (33) gebildet ist, das aus einer Filterglocke (34) besteht, die über den Stufenabsatz (35) für die kleine Stufenbohrung (25) geschoben ist, und aus einem Filterkörper (36), der als Rohrabschnitt über den Stufenabsatz (31) für die große Stufenbohrung (26) geschoben ist, sowie aus einem über das Spulengehäuse (2) geschobenen Verspanngehäuse (37), das sich an einem Bund (21) axial abstützt und mit Klippsarmen (38) in die Filterglocke (34) eingreift und in Ausnehmungen (39) einrastet, wobei beim Einrasten an der Axialwand (40), die sich am Bund (21) abstützt, strahlenförmig ausgebildete Ausnehmungen (41) Federsegmente (42) bilden, die überbrückt werden.

6. Schaltventil nach Anspruch 5, dadurch gekennzeichnet, daß sich die Federsegmente (42) bei verklippster Filterglocke (34) und verklippstem Verspanngehäuse (37) unter Federwirkung an dem Bund (21) abstützen, an dem sich andererseits der Filterkörper (36) abstützt, der mit der anderen Stirnfläche gegen eine Stirnwand (43) der Filterglocke (34) anliegt.

7. Schaltventil nach einem der Ansprüche 5 oder 6, dadurch gekennzeichnet, daß die Filterglocke (34) einen Anschlußstutzen (44) aufweist, der in die kleine Stufenbohrung (25) führt, wobei die strahlenförmigen Ausnehmungen (41) Anschlußöffnungen (45) zur Atmosphäre für eine außerhalb des Filterkörpers (36) bestehende Filterglockenkammer (46) bilden.

8. Elektromagnetisches Schaltventil nach Anspruch 1 bis 3 oder Anspruch 4, dadurch gekennzeichnet, daß der eine Anschlußstutzen (13), an dem der Ventilsitz (12) angeordnet ist, oder die eine der Stufenbohrungen (25) einen Abzweig (47) aufweist, in dem ein Saug- und/oder Druckventil (48) angeordnet ist, das einen Bypasskanal (49) zum Ventilsitz (12) steuert.

9. Schaltventil nach Anspruch 8, dadurch gekennzeichnet, daß der Abzweig (47) zu einer Zwischenkammer (50) erweitert ist und in deren radialer oder axialer Begrenzungswand (51), die andererseits eine vor dem Ventilsitz (12) liegende, außerhalb des Filterkörpers (36) bestehende Filterglockenkammer (46) oder innerhalb des Filterkörpers bestehende Kammer abgrenzt, zwei Bypasskanäle (52, 53) angeordnet sind, die durch Elastomerschließkörper (54, 55) kontrolliert werden, die bei Überschreitung einer vorgegebenen, an ihnen anliegenden Druckdifferenz öffnen oder schließen.

10. Schaltventil nach Anspruch 9, dadurch gekennzeichnet, daß die axialen Begrenzungswände (51) durch einen in die Filterglocke (34) vor den Anschlußstutzenkanal (44) dichtend eingeschobenen Trichterkörper (56) gebildet sind, der mit einem Kragen (57) den Filterkörper (36) abstützt und mit einer zentralen Bohrung (58) den Stufenabsatz (35) aufnimmt.

11. Schaltventil nach Anspruch 10, dadurch gekennzeichnet, daß die radiale Begrenzungswand (59) durch eine axiale Verlängerung (60) des Stufenabsatzes (35) gebildet ist, die eine radiale innere Erweiterung (61) aufweist und den Filterkörper (36) dichtend lagert.

## Claims

1. Electromagnetic switching valve, in particular for use in an internal combustion engine, comprising a coil housing (2) and a valve housing (11), a valve element (15) which is disposed in the valve housing (11) and cooperates with a valve face (12), connectors (13, 14) upstream and downstream of the valve face (12), a magnet armature (8) and an intermediate rod (16), which is clamped between valve element (15) and magnet armature (8) and rests without radial support against the magnet armature (8), characterized in that the valve element takes the form of a valve plate (15), the intermediate rod (16) is radially guided inside longitudinal ribs (17) of the valve housing (11) and that the valve plate (15) is radially and axially supported in a ball cup bearing (18) provided on the intermediate rod (16).

2. Switching valve according to claim 1, characterized in that a restoring spring (19) is disposed between valve housing (11) and intermediate rod (16).

3. Switching valve according to claim 1 or 2,
characterized in that the intermediate rod (16) has two disc-type collars (20) which cooperate with the longitudinal ribs (17).

4. Switching valve according to one of claims 1 to 3, characterized in that the valve housing (11) is inserted into a stepped bore (23) of a connection housing (24) and for each individual stepped bore (25, 26) has an O-ring (29, 30) inserted into a valve housing groove (27, 28), the valve housing (11) between the valve face (12) and the stepped shoulder (31), which projects into the largest stepped bore (26), having openings (32) between the longitudinal ribs (17).

5. Switching valve according to claim 4, characterized in that the connection housing is formed by a filter housing (33) comprising a filter bell (34), which is pushed over the stepped shoulder (35) for the small stepped bore (25), and a filter element (36), which is pushed as a tubular portion over the stepped shoulder (31) for the large stepped bore (26), as well as a bracing housing (37) which is pushed over the coil housing (2), is axially supported against a collar (21) and has clip arms (38), which engage into the filter bell (34) and latch into recesses (39), and upon latching recesses (41) constructed radially at the axial wall (40), which is supported against the collar (21), form spring segments (42) which are pressurized.

6. Switching valve according to claim 5, characterized in that the spring segments (42), when the filter bell (34) and bracing housing (37) are clipped together, are supported by spring action against the collar (21), against the other side of which the filter element (36) is supported, which lies with its other end face against an end wall (43) of the filter bell (34).

7. Switching valve according to one of claims 5 or 6, characterized in that the filter bell (34) has a connector (44) which leads into the small stepped bore (25), the radial recesses (41) forming connection openings (45) to the atmosphere for a filter bell chamber (46) situated outside of the filter element (36).

8. Electromagnetic switching valve according to claims 1 to 3 or claim 4, characterized in that the one connector (13), at which the valve face (12) is disposed, or the one stepped bore (25) has a branch (47) containing a suction and/or delivery valve (48), which controls a bypass channel (49) leading to the valve face (12).

9. Switching valve according to claim 8, characterized in that the branch (47) is widened to form an intermediate chamber (50) and disposed in the latter's radial or axial boundary wall (51), which at the other side delimits a filter bell chamber (46) situated in front of the valve face (12) and outside of the filter element (36) or a chamber situated inside the filter element, are two bypass channels (52, 53) which are controlled by elastomeric closing elements (54, 55), which open or close when a preset pressure difference applied against them is exceeded.

10. Switching valve according to claim 9, characterized in that the axial boundary walls (51) are formed by a funnel element (56), which is sealingly inserted into the filter bell (34) in front of the connector channel (44), supports the filter element (36) by means of a collar (57) and accommodates the stepped shoulder (35) in a central bore (58).

11. Switching valve according to claim 10, characterized in that the radial boundary wall (59) is formed by an axial extension (60) of the stepped shoulder (35), which extension has a radial, internal widening (61) and sealingly supports the filter element (36).

## Revendications

1. Electrovanne de commutation, en particulier pour utilisation dans un moteur à combustion interne, constituée d'un logement de bobine (2) et d'un corps de vanne (11), d'un obturateur (15) monté dans le corps de vanne (11) et coopérant avec un siège (12), de tubulures de raccordement (13, 14) en amont et en aval du siège (12), d'une armature magnétique (8) et d'une tige intermédiaire (16) montée entre l'obturateur (15) et l'armature magnétique (8) et s'appuyant sur l'armature magnétique (8) sans appui radial, caractérisée par le fait que l'obturateur est un plateau (15), la tige intermédiaire (16) est guidée radialement à l'intérieur de nervures longitudinales (17) du corps de vanne (11), et le plateau (15) est appuyé radialement et axialement dans une cuvette sphérique (18) prévue sur la tige intermédiaire (16).

2. Electrovanne selon la revendication 1, caractérisée par le fait qu'un ressort de rappel (19) est placé entre le corps de vanne (11) et la tige intermédiaire (16).

3. Electrovanne selon l'une des revendications 1 et 2, caractérisée par le fait que la tige intermédiaire (16) présente deux collets disques (20) qui coopèrent avec les nervures longitudinales (17).

4. Electrovanne selon l'une des revendications 1 à 3, caractérisée par le fait que le corps de vanne (11) est monté dans un alésage étagé (23) d'une boîte de raccordement (24) et présente pour chaque alésage (25, 26) un joint torique (29, 30) placé dans une gorge (27, 28) du corps de vanne, le corps de vanne (11) présentant des ouvertures (32) entre les nervures longitudinales (17) entre le siège de vanne (12) et le talon à gradin (31), qui entre dans le grand alésage (26).

5. Electrovanne selon la revendication 4, caractérisée par le fait que la boîte de raccordement est formée par un boîtier de filtre (33) qui est constitué d'une cloche de filtre (34) qui est glissée par-dessus le talon à gradin (35) pour le petit alésage (25), d'un corps de filtre (36) qui est glissé comme morceau de tube par-dessus le talon à gradin (31) pour le grand alésage (26), et d'une boîte de serrage (37) qui est glissée par-dessus le logement de bobine (2), s'appuie axialement sur un collet (21) et, par des bras de clipage (38), s'engage dans la cloche de filtre (34) et s'encliquette dans des évidements (39), des évidements rayonnants (41), faits sur la paroi axiale (40) qui s'appuie sur le collet (21), formant lors de l'encliquetage des segments élastiques (42) qui sont pontés.

6. Electrovanne selon la revendication 5, caractérisée par le fait que lorsque la cloche de filtre (34) et la boîte de serrage (37) sont clipées, les segments élastiques (42) s'appuient avec action élastique sur le collet (21), sur lequel s'appuie d'autre part le corps de filtre (36), qui s'appuie par son autre face frontale contre une paroi frontale (43) de la cloche de filtre (34).

7. Electrovanne selon l'une des revendications 5 et 6, caractérisée par le fait que la cloche de filtre (34) présente une tubulure de raccordement (44) qui mène au petit alésage (25), les évidements rayonnants (41) formant des orifices de raccordement (45) vers l'atmosphère pour une chambre de cloche de filtre (46) existant à l'extérieur du corps de filtre (36).

8. Electrovanne selon l'une des revendications 1 à 3 ou la revendication 4, caractérisée par le fait que la tubulure de raccordement (13) sur laquelle se trouve le siège (12) ou un des alésages (25) présente un branchement (47) dans lequel est monté un clapet d'aspiration et/ou de refoulement (48) qui commande une voie de dérivation (49) vers le siège (12).

9. Electrovanne selon la revendication 8, caractérisée par le fait que le branchement (47) est élargi en une chambre intermédiaire (50), et dans la paroi de limitation radiale ou axiale (51) de celle-ci, qui délimite d'autre part une chambre de cloche de filtre (46) existant à l'extérieur du corps de filtre (36) et située devant le siège (12) ou une chambre existant à l'intérieur du corps de filtre, sont faites deux voies de dérivation (52, 53) qui sont contrôlées par des corps obturateurs en élastomère (54, 55) qui s'ouvrent ou se ferment en cas de dépassement d'une différence de pression fixée appliquée à eux.

10. Electrovanne selon la revendication 9, caractérisée par le fait que les parois de limitation axiales (51) sont formées par un corps en entonnoir (56) qui est engagé de manière étanche dans la cloche de filtre (34) devant le canal de tubulure de raccordement (44), supporte par un collet (57) le corps de filtre (36) et reçoit par un alésage central (58) le talon à gradin (35).

11. Electrovanne selon la revendication 10, caractérisée par le fait que la paroi de limitation radiale (59) est formée par un prolongement axial (60) du talon à gradin (35) qui présente un élargissement radial intérieur (61) et supporte de manière étanche le corps de filtre (36).
